# NEUE EUROPÄISCHE PATENTSCHRIFT

(11) **EP 3 760 914 B2**
(45) Veröffentlichungstag und Bekanntmachung des Hinweises auf die Entscheidung über den Einspruch: **07.05.2025**
(45) Hinweis auf die Patenterteilung: 09.03.2022
(21) Anmeldenummer: 20183768.9
(22) Anmeldetag: 02.07.2020
(51) Int. Cl.: F21S 8/04, F21V 23/04, F21W 131/103

(54) **PERSONEN- UND FAHRZEUGBEZOGENE ENTBLENDUNG VON LEUCHTEN**
PERSONAL AND VEHICLE-RELATED GLARE SUPPRESSION FOR LIGHTS
PROTECTION DE PERSONNES ET DE VÉHICULES CONTRE L'ÉBLOUISSEMENT PAR DES LUMINAIRES

(30) Priorität: 05.07.2019 DE 102019118283
(43) Veröffentlichungstag der Anmeldung: 06.01.2021
(73) Patentinhaber: Siteco GmbH, 83301 Traunreut (DE)
(72) Erfinder: Wuppinger, Bernhard, 83362 Surberg (DE); Schroll, Katrin, 83301 Matzing (DE)
(74) Vertreter: Schmidt, Steffen

(56) Entgegenhaltungen:
- EP-A1- 2 789 213
- EP-A1- 3 089 559
- WO-A1-2018/048528
- CN-A- 109 724 020
- US-A1- 2005 018 434
- US-A1- 2014 320 023
- US-A1- 2016 150 614
- US-A1- 2018 324 929
- US-B2- 9 930 752

## Beschreibung

Die vorliegende Erfindung betrifft eine Leuchte zur stationären Montage in einem Innenbereich (z.B. Hochregallager oder Flur) oder Außenbereich (z.B. Verkehrsweg oder Parkplatz) mit einer veränderbaren Lichtverteilung.

Für Lichtinstallationen im Innen- und Außenbereich werden in vielen Anwendungsbereichen Leuchten mit einer breiten Lichtverteilung eingesetzt, um die gleichmäßige Beleuchtung einer großen Fläche mit möglichst wenig Leuchten zu erreichen. Um trotz der großen auszuleuchtenden Fläche eine ausreichende Beleuchtungsstärke zu erreichen, müssen einerseits hohe Lichtströme verwendet werden und andererseits muss ein großer Anteil des von der Leuchte ausgesendeten Lichts die Leuchte unter sehr kleinen Winkeln (gegenüber der Horizontalen) verlassen. Diese beiden Maßnahmen erhöhen jedoch die Blendwirkung der Leuchte. Insbesondere für Tätigkeiten mit kritischen Sehaufgaben gibt es daher Vorschriften zur Blendungsbegrenzung (z.B. DIN EN 13201). Um für kritische Sehaufgaben eine Blendung zu vermeiden und dennoch eine hohe Beleuchtungsstärke der Anwenderebene zu erreichen, müssen daher geringere Leuchtenabstände gewählt werden.

Ein Nachteil besteht dabei darin, dass einerseits höhere Installations- und Anschaffungskosten anfallen, und weiterhin eine größere Anzahl von Leuchten gewartet werden muss.

Eine Leuchte gemäß dem Oberbegriff des Anspruchs 1 ist aus der US 2014/320023 A1 bekannt. Weitere Beleuchtungsvorrichtungen, welche insbesondere zur Verringerung der Blendung eingerichtet sind, sind aus der US 2018/324929 A1, US 2016/150614 A1 und CN 109724020 A bekannt.

Aufgabe der vorliegenden Erfindung ist es, eine Leuchte mit veränderbarer Lichtverteilung bereitzustellen, die die Blendung einer Person, ggf. in einem Fahrzeug, reduziert.

Gelöst wird die Aufgabe durch einen Leuchte nach Anspruch 1.

Eine Besonderheit der erfindungsgemäßen Leuchte besteht in der Art der Blendvermeidung. Eine Steuereinrichtung der Leuchte empfängt eine Sensorinformation und wertet diese aus, um einen Raumwinkel der Leuchte zu bestimmen, in welchem sich eine Person bzw. ein Fahrzeug der Leuchte nähert. Durch das Ansteuern der Lichtverteilung der Leuchte wird der Lichtstrom der Leuchte in dem genannten Raumwinkel, in dem sich die Person bzw. das Fahrzeug nähert, verringert. Durch das gezielte Verringern des Lichtstroms in dem Raumwinkel, in dem sich eine Person bzw. ein Fahrzeug der Leuchte nähert und folglich die Blickrichtung zur Leuchte weist, wird eine mögliche Blendung der Person bzw. des Fahrzeuginsassen stark verringert, da die Lichtstärke (Lichtstrom pro Raumwinkel) am Aufenthaltsort der Person bzw. des Fahrzeugs reduziert wird. Zugleich kann die Leuchte jeden anderen Raumwinkel mit einer großen Lichtintensität ausleuchten solange keine Person ggf. in einem Fahrzeug mit Blickrichtung auf die Leuchte in diesen Raumwinkeln anwesend ist. Folglich kann bei der Planung und Installation der Beleuchtungsanlage eine geringere Anzahl an Leuchten, welche mit einem größeren Abstand zueinander stehen, vorgesehen werden.

Gemäß einer bevorzugten Ausführungsform weist die Leuchte in einer vertikalen Schnittebene durch die Leuchte (C(0-180)-Ebene) eine breitstrahlende Lichtstärkeverteilungskurve (LVK) auf. Die breitstrahlende LVK ermöglicht es mit der Leuchte insbesondere länglich geschnittene Flächen (z.B. Gänge oder Straßen) mit großen Leuchtenabständen zu beleuchten.

Gemäß einer bevorzugten Ausführungsform ist die Leuchte zur Befestigung an einer Gebäudestruktur, wie beispielsweise einer Wand oder Decke, oder an einem Mast, beispielsweise ein Lichtmast, eingerichtet. Dies vereinfacht das Anbringen der Leuchte an einer höher gelegenen Gebäudestruktur, beispielsweise an der Decke eines Hochregallagers, oder einer Verkehrsstruktur, beispielsweise ein Mast für eine Straßenbeleuchtungseinheit. Durch das Anbringen der Leuchte an dieser Struktur kann insbesondere die Möglichkeit der großflächigen Beleuchtung optimal ausgenutzt werden.

Gemäß einer bevorzugten Ausführungsform kann eine Leuchte mehrere Lichtquellen aufweisen und das Anpassen des Lichtstroms durch ein Dimmen wenigstens einer der mehreren Lichtquellen geschehen. Das Anordnen von mehreren Lichtquellen in der Leuchte bietet den Vorteil, dass die Lichtquellen unabhängig voneinander ausgerichtet werden können und somit Lichtströme in unterschiedliche Raumwinkel der Leuchte abgeben können. Zugleich bietet diese Form der Anordnung von dimmbaren Lichtquellen die Möglichkeit, den Lichtstrom in einem bestimmten Raumwinkel der Leuchte durch bloßes Dimmen der betreffenden Lichtquellen, deren Lichtstrom in diesen Raumwinkel der Leuchte gesendet wird, zu verringern. Folglich ermöglicht diese Art der Leuchtenausführung die Verwendung eines kostengünstigen und wartungsarmen Leuchtenmoduls.

Gemäß einer bevorzugten Ausführungsform weist die Leuchte wenigstens eine bewegliche Optik auf. Das Anpassen des Lichtstroms erfolgt durch ein Verlagern der Optik gegenüber der Lichtquelle. Diese Ausführungsform ermöglicht die Verwendung einer oder mehreren zentral angeordneten, lichtstarken Lichtquellen. Ferner bietet das Verwenden einer Optik die Möglichkeit, komplexe Strukturen mit einer hochvariablen Lichtverteilung auszuleuchten.

Erfindungsgemäß ist die Leuchte zur Beleuchtung mehrerer, insbesondere parallel zueinander verlaufender Straßen oder anderen Verkehrswegen eingerichtet. Die Steuerung der Leuchte verarbeitet eine Sensorinformation, um für mehrere Personen und/oder Fahrzeuge Raumwinkel der Leuchte, in welchen sich jeweils eine Person bzw. ein Fahrzeug der Leuchte nähert, zu bestimmen. Das Verringern der Lichtströme der Leuchte erfolgt anschließend in den jeweiligen Raumwinkeln. Dies bietet den Vorteil, dass beispielsweise bei nebeneinanderliegenden, mehrspurigen Straßen die Verwendung einer einzigen Leuchte für jeweils einen Längenabschnitt der Straße ausreicht.

Erfindungsgemäß ist die Steuerung ferner dazu eingerichtet, die Lichtverteilung in dem Raumwinkel der Leuchte, in welchem sich eine Person bzw. ein Fahrzeug befindet und sich von der Leuchte entfernt, zu erhöhen. Mit Rückbezug auf die zuvor genannte bevorzugte Ausführungsform, erfolgt das Erhöhen der Lichtverteilung in mehreren Raumwinkeln der Leuchte, in welchen sich jeweils eine Person bzw. ein Fahrzeug von der Leuchte entfernt. Diese Ausführungsform bietet den Vorteil, dass der Beleuchtungsreduzierung mit verringerter Lichtintensität in einem Raumwinkel möglichst kurz gehalten werden kann, um die Ausleuchtung für nachfolgende Person bzw. das Fahrzeug zu verbessern. Ferner vereinfacht ein zusätzliches Erhöhen des Lichtstroms im betreffenden Raumwinkel das Erkennen der Person bzw. des Fahrzeugs, welche bzw. welches den erhellten Raumwinkel passiert und somit von hinten stärker angestrahlt wird. Gemäß einer bevorzugten Ausführungsform wird die Sensorinformation durch wenigstens einen Sensor bereitgestellt, wobei der Sensor in der Leuchte verbaut ist. Dies bietet den Vorteil, dass die Leuchte selbstständig ihre Umgebung erfassen kann und somit nur Stromgebunden ist.

Gemäß einer bevorzugten Ausführungsform wird die Sensorinformation durch einen Sensor bereitgestellt, welcher extern von der Leuchte angeordnet ist, wobei die Leuchte eine Schnittstelle zum Empfangen der Sensorinformation aufweist. Diese Anordnung bietet die Möglichkeit, einen Sensor mit einer sehr großen Erfassungsreichweite zentral anzubringen, wobei die Sensorinformation an die Leuchte, und ggf. weitere Leuchten, gesendet wird.

Gemäß einer bevorzugten Ausführungsform wird die Sensorinformation durch mehrere Sensoren bereitgestellt, welche sowohl in der Leuchte verbaut sind, als auch extern von der Leuchte angebracht sein können. Diese Ausführungsform ermöglicht es, dass die Leuchte beispielsweise mittels Kurzstreckensensoren die unmittelbare Umgebung erfasst, während extern angebrachte Langstreckensensoren zusätzliche Sensorinformationen an die Leuchte senden. Dadurch kann einerseits die Genauigkeit der Ansteuerung der Leuchte verbessert werden, andererseits aber auch ein ausfallsicheres System bereitgestellt werden.

Gemäß einer bevorzugten Ausführungsform ist die Sensoreinrichtung ein Radarsensor, ein Ultraschallsensor, ein Hochfrequenzsensor, ein Mikrowellensensor, ein Kamerasensor, ein LIDAR-Sensor, Helligkeitssensor, ein Leuchtdichte-Sensor, und/oder ein Infrarotsensor. Ein Radarsensor ist zur Erfassung von langen Strecken, beispielsweise einer Straße, und insbesondere schnellen Fahrzeugen, beispielsweise auf einer Bundesstraße, geeignet. Ein Ultraschallsensor ermöglicht die präzise Überwachung von kurzen und mittleren Distanzen (ohne verdeckte Sichtachse). Ein Hochfrequenzsensor kann insbesondere zur hochpräzisen Überwachung im Innenraum eingesetzt werden. Ein Mikrowellensensor kann insbesondere zur Überwachung von Bereichen mit versperrter Sichtachse, beispielsweise von Regalen oder dünnen Wänden, verwendet werden. Ein Kamerasensor kann insbesondere zu Überwachung und Auswertung komplexer Situationen verwendet werden. Ein LIDAR-Sensor (light detection and ranging) kann für die 360°-Überwachung großer Flächen mittels eines Lasers eingesetzt werden. Ein Helligkeitssensor kann für die Detektion von Hell-Dunkel-Änderungen verwendet werden. Ein Leuchtdichtesensor kann insbesondere zur Detektion von leuchtenden Strukturen, beispielsweise sich annäherndem Scheinwerferlicht, genutzt werden. Ein Infrarotsensor kann zum Erfassen von Temperaturänderungen, beispielsweise durch sich nähernde Personen, genutzt werden. Kombinationen der Sensoren sind ebenso möglich.

Weitere Vorteile und Merkmale werden aus der nachfolgenden Beschreibung bevorzugter, nicht beanspruchter Ausführungsformen deutlich, die in Verbindung mit den Figuren gegeben wird. In den Figuren ist folgendes dargestellt:
- Figur 1: zeigt eine perspektivische Ansicht konventioneller Leuchten mit einem Fahrzeug.
- Figur 2: zeigt eine Ansicht gemäß Figur 1 mit Leuchten und das Dimmen des Lichtstroms aufgrund des sich nähernden Fahrzeugs.
- Figur 3: illustriert das Dimmen des Lichtstroms aufgrund des Fahrzeugs aus Figur 2, welches die erste Leuchte passiert hat.
- Figur 4: zeigt perspektivische die Ausleuchtung eines Hochregallagers mit konventionellen Leuchten und einem sich bewegenden Fahrzeug.
- Figur 5: zeigt die blendfreie Ausleuchtung eines Hochregallagers gemäß Figur 4 mit Leuchten.
- Figur 6: zeigt perspektivische die Ausleuchtung eines zweispurigen Wegs mit einer Leuchte und zwei sich nähernden Fahrzeugen.
- Figur 7: illustriert die veränderte Lichtverteilung zum Verhindern der Blendung der Fahrzeuge aus Figur 6.

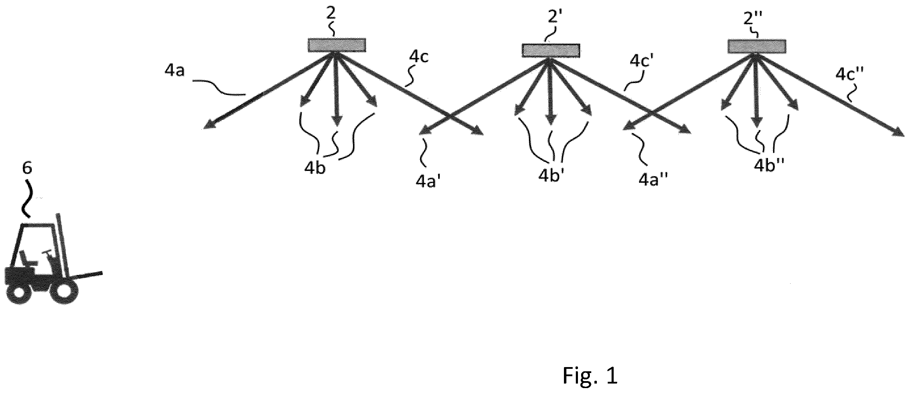

In den Figuren 1 bis 3 wird beispielhaft eine Beleuchtungssituation dargestellt. Die Leuchten 2 bis 2" mit veränderbarer Lichtverteilungskurve, welche im Rahmen dieser Offenbarung verwendet werden können, sind in der deutschen Patentanmeldung mit selben Anmeldetag und mit dem Titel "Leuchte mit adaptiver LVK" derselben Anmelderin beschrieben. Im Beispiel der Figuren 1 bis 3 sind die Leuchten 2 bis 2" an einer erhöhten Position angebracht, beispielsweise der Decke, und geben ihr Licht nach unten auf die Anwenderebene ab. Die Lichtverteilung wird mit den Pfeilen 4X bis 4X" verdeutlicht, wobei die Länge des Pfeils die Lichtintensität in dem betreffenden Raumwinkel veranschaulicht, und "X" Platzhalter für einen Buchstaben von "a" bis "c" ist, welcher jeweils einer unterschiedlichen Richtung und/oder einem unterschiedlichen Winkel zugeordnet ist, unter dem der Lichtstrom die Leuchte verlässt. Um eine gleichmäßige Leuchtdichte zu erreichen, müssen die äußeren Raumwinkel der Lichtverteilung mit hoher Intensität ausgeleuchtet werden, hier 4a bis 4a" und 4c bis 4c".

In Figur 1 wird die Verwendung einer nicht-gesteuerten Leuchte mit breitstrahlender Lichtverteilungskurve illustriert. Wie in Figur 1 zu erkennen ist, ist die Lichtintensität aller Leuchten 2 bis 2" im jeweiligen Raumwinkel identisch. Es erfolgt keine Ansteuerung der Lichtverteilung durch ein Verringern des Lichtstroms. Im dargestellten Fall, würde eine Person im Fahrzeug 6, welche sich im äußeren Bereich des Lichtkegels der Leuchte 2 befindet, durch die in Fahrtrichtung liegende Lichtverteilung mit hoher Intensität 4a geblendet werden.

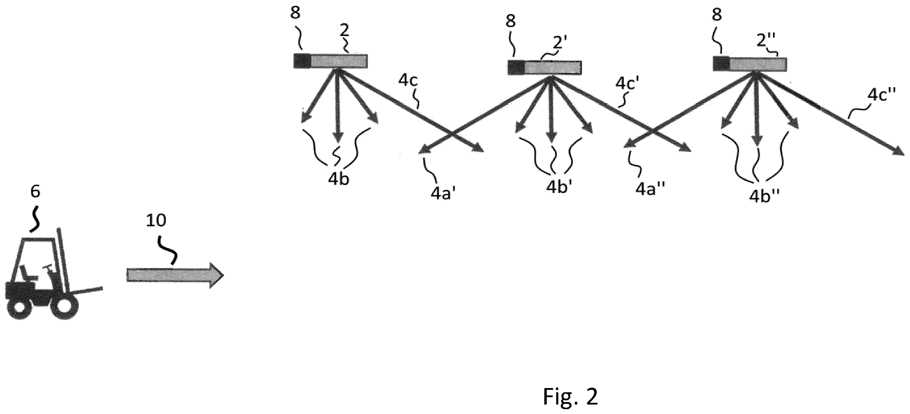

Figur 2 zeigt dieselbe Ausgangslage wie Figur 1, wobei die Leuchten 2 bis 2" im vorliegenden Fall zusätzlich über einen Sensor 8 verfügen. Dieser Sensor ermöglicht die Bereitstellung der Sensorinformation, welche von der Steuereinrichtung der Leuchte verarbeitet wird. Nähert sich die Person bzw. das Fahrzeug 6, angezeigt durch die Fahrtrichtung 10, erkennen die Sensoren die sich nähernde Personen oder das Fahrzeug 6 und geben diese Sensorinformationen an das Steuergerät der Leuchte weiter. Das Steuergerät verarbeitet die Sensorinformation und bestimmt den Raumwinkel, in welchem sich das Fahrzeug der Leuchte nähert. Der von der Steuereinrichtung bestimmte Raumwinkel ist der Bereich, in welchem die Person bzw. das Fahrzeug 6 den äußeren Lichtkegel durchschreitet oder -fährt. Genau dieser Raumwinkel, welcher eine hohe Lichtintensität aufweist, bildet den kritischen Bereich, in welchem die Person bzw. das Fahrzeug 6 die stärkste Blendung erfahren. Wie aus Figur 2 hervorgeht, wurde die Lichtverteilung der Leuchte in diesem Bereich angesteuert, um den Lichtstrom in diesem Raumwinkel (Lichtintensität) zu verringern. Dies zeigt sich im direkten Vergleich zwischen Figur 1 und Figur 2 durch das Fehlen der Lichtverteilung mit hoher Intensität in Fahrtrichtung 4a, welche die Person bzw. das Fahrzeug 6 blenden würde.

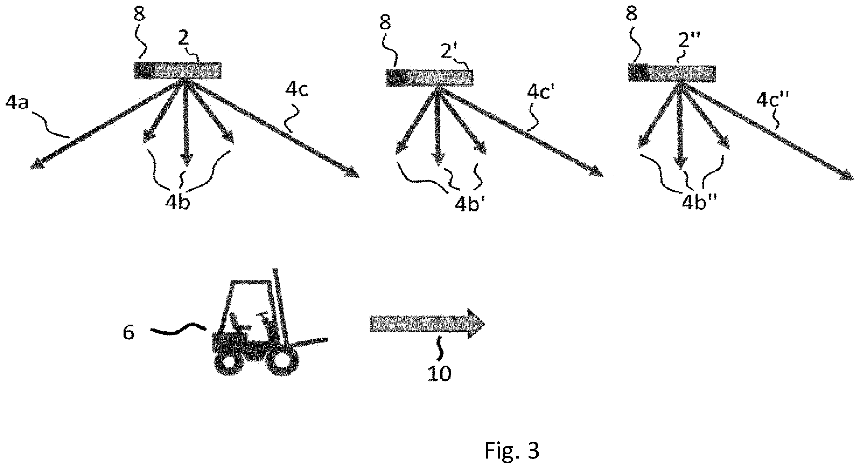

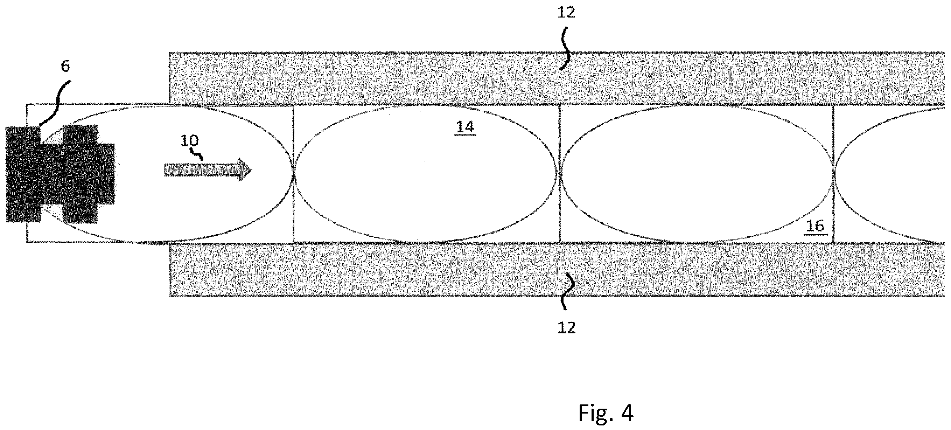

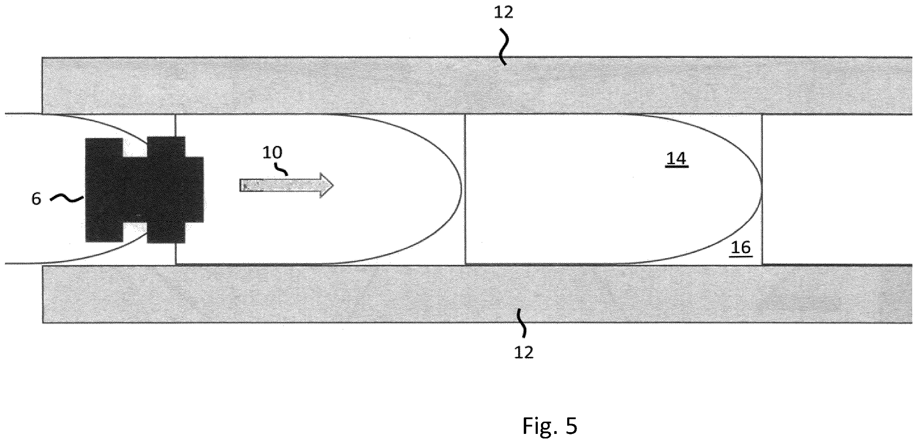

In Figur 3 wird der weitere Regelverlauf des Lichtsystems illustriert. Die Person bzw. das Fahrzeug 6, welches die Bewegungsrichtung 10 beibehält, wird nun, im Vergleich zu Figur 2, zu einem späteren Zeitpunkt dargestellt. Im Vergleich zu Figur 2 ist die Lichtverteilung mit hoher Intensität in Fahrtrichtung 4a der Leuchte 2 nicht mehr verringert, da die Person bzw. das Fahrzeug 6 diese Leuchte bereits passiert hat. Aufgrund der Fahrtrichtung 10 und der Position der Person bzw. des Fahrzeugs 6, sind nun die Lichtverteilungen mit hoher Intensität in Fahrtrichtung 4a' und 4a" verringert, um eine Blendung zu verhindern. Alternativ kann, je nach Einsatzort, das Verringern des Lichtstroms durch ein geringes Abdunkeln im betreffenden Raumwinkel erfolgen. Ferner kann es in bestimmten Anwendungsfällen, beispielsweise bei der Beleuchtung im Tunnel, hilfreich sein, bei einem sich nähernden Fahrzeug bereits Lichtströme von weiteren, in Fahrtrichtung nachfolgenden Leuchten abzudunkeln, um die Hell-Dunkel-Grenzen-Verschiebung in einem geeigneten Abstand (z.B. empfohlener Mindestabstand zum vorausfahrenden Fahrzeug) homogen vor dem Fahrzeug zu halten. Das erneute Erhöhen des Lichtstroms in zuvor abgedunkelten Raumwinkeln kann erfolgen, unmittelbar nachdem die Person bzw. das Fahrzeug 6 den für die Blendung kritischen Raumwinkel verlassen haben, oder beispielsweise auch erst nach Ablauf einer Wartezeit. Die Figuren 4 und 5 illustrieren die Verwendung der Leuchte am Beispiel eines Hochregallagers. Die Leuchten sind, wie beispielsweise in Figur 1 dargestellt, an der Decke angebracht und erhellen den Weg zwischen den Regalen 12 mit einer elliptischen Lichtverteilung 14, gemessen im Kegelmantelschnitt der zu beleuchtenden Fläche.

Figur 4 stellt die Situation mit Leuchten dar, deren Lichtintensität nicht gesteuert wird. Dies ist daran zu erkennen, dass im Bereich des Fahrzeugs 6 die Lichtverteilung 14 in Figur 4 in Bewegungsrichtung des Fahrzeugs vor und hinter dem Fahrzeug spiegelsymmetrisch ist. Die Beleuchtungsstärke auf der beleuchteten Fläche ist an jedem Punkt ähnlich groß, um eine möglichst homogene Ausleuchtung der rechteckigen Anwenderebene 16 zu erzeugen.

Figur 5 zeigt eine zu Figur 4 identische Ausgangssituation, jedoch unter der Verwendung von gesteuerten Leuchten. Im jeweiligen Raumwinkel, aus dem sich das Fahrzeug in Fahrtrichtung 10 der Leuchte nähert, wird der Lichtstrom der Leuchte verringert. Dadurch wird erreicht, dass die Blendung der Person im Fahrzeugs 6 vermieden wird und trotz einer einseitig verzerrten Lichtverteilung eine etwa homogene Ausleuchtung in der Anwenderebene 16 erzeugt wird. Dargestellt wird dies durch die scharfe Hell-Dunkel-Grenze am jeweiligen rechten Rand der Lichtverteilung 14, wohingegen die jeweilige Lichtverteilung auf der linken Seite des Lichtkegels sanft ausgeblendet ist (keine elliptische Begrenzung auf der linken Hälfte der Anwenderebene 16).

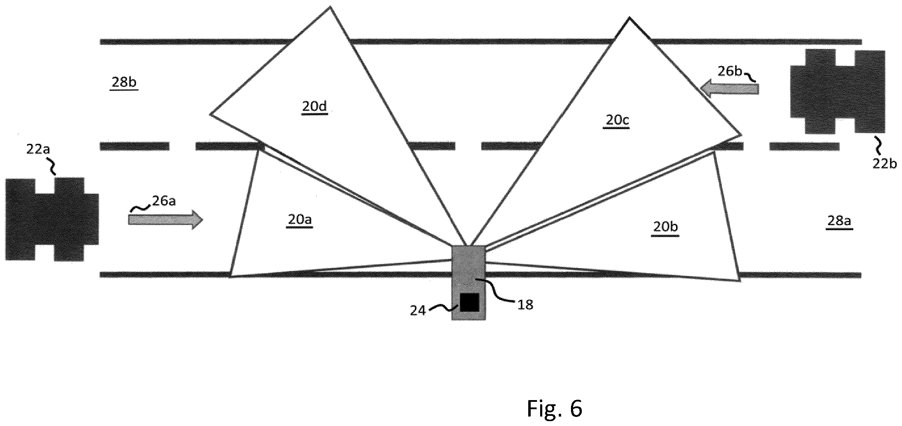

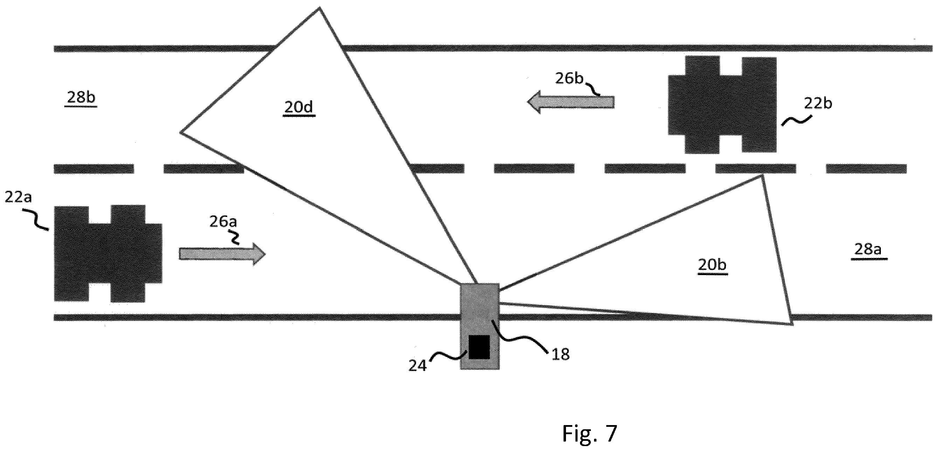

Die Figuren 6 und 7 stellen ein weiteres Anwendungsbeispiel für die Leuchte 18 dar. Die Leuchte 18 leuchtet die beiden Straßen 28a und 28b einer zweispurigen Straße mit jeweils zwei Lichtkegeln pro Weg aus (links der Leuchte 20a und 20d, und rechts der Leuchte 20b und 20c). Bewegen sich, wie in Figur 6 und 7 dargestellt, Fahrzeuge 22a und 22b in Fahrtrichtung 26a und 26b auf die Leuchte zu, werden diese vom Sensor 24 erfasst.

Figur 6 zeigt den Fall, dass sich die beiden Fahrzeuge 22a und 22b auf die Raumwinkel 20a und 20c der Leuchte zubewegen. In der Darstellung von Figur 7 haben die beiden Fahrzeuge 22a und 22b den jeweils in Fahrtrichtung der Person bzw. des Fahrzeugs vor der Leuchte liegenden Raumwinkel erreicht. In diese Raumwinkel 20a und 20c wurde der Lichtstrom verringert, um eine Blendung der Verkehrsteilnehmer zu vermeiden.

### BEZUGSZEICHENLISTE

- 2-2": Leuchte
- 4a-4a": Lichtstärke
- 4b-4b": Lichtstärke
- 4c-4c": Lichtstärke
- 6: Fahrzeug
- 8: Sensor
- 10: Fahrtrichtung
- 12: Regalwand
- 14: Lichtverteilung
- 16: Anwenderebene
- 18: Leuchte
- 20a, 20b: Raumwinkel in Fahrtrichtung auf unteren Weg
- 20c, 20d: Raumwinkel entgegen der Fahrtrichtung
- 22a, 22b: Fahrzeug
- 24: Sensor
- 26a, 26b: Fahrtrichtung
- 28a, 28b: Spur einer Straße

## Patentansprüche

1. Leuchte (2) zur stationären Montage in einem Innen- oder Außenraum mit einer veränderbaren Lichtverteilung,
wobei die Leuchte eine Steuereinrichtung (8, 24) aufweist, die eingerichtet ist, um eine Sensorinformation zu empfangen, durch die Sensorinformation einen Raumwinkel der Leuchte (2), in welchem sich eine Person oder ein Fahrzeug (6) der Leuchte nähert, zu bestimmen, und die Lichtverteilung der Leuchte (2) anzusteuern, um einen Lichtstrom der Leuchte, der in den genannten Raumwinkel (4a) abgegeben wird, zu verringern,
wobei die Steuerung ferner eingerichtet ist, um den Lichtstrom in einem Raumwinkel der Leuchte (4c), in welchem sich die Person oder Fahrzeug befindet und sich von der Leuchte entfernt, zu erhöhen,
wobei die Leuchte (2) zur Beleuchtung mehrerer, insb. parallel zueinander verlaufender Straßen (28a, 28b) eingerichtet ist, und
die Steuerung eingerichtet ist, um aus der Sensorinformation für mehrere Personen und/oder Fahrzeuge (22a, 22b) Raumwinkel (20a, 20c) der Leuchte, in welchem sich jeweils eine Person oder ein Fahrzeug (22a, 22b) nähert, zu bestimmen,
und die Leuchte anzusteuern, um Lichtströme der Leuchte, die in den genannten Raumwinkel (20a, 20c) abgegeben werden, zu verringern.

2. Leuchte nach Anspruch 1, wobei die Leuchte (2) in der C(0-180)-Ebene eine breitstrahlende Lichtstärkeverteilungskurve aufweist.

3. Leuchte nach einem der vorherigen Ansprüche, wobei die Leuchte (2) zur Befestigung an einer Gebäudestruktur, insbesondere Wand oder Decke, oder an einem Mast eingerichtet ist.

4. Leuchte nach einem der vorherigen Ansprüche, wobei die Leuchte (2) mehrere Leuchtquellen aufweist, und das Anpassen des Lichtstroms durch ein Dimmen wenigstens einer der mehreren Lichtquellen erfolgt.

5. Leuchte nach einem der vorherigen Ansprüche, wobei die Leuchte (2) wenigstens eine bewegliche Optik aufweist, und das Anpassen des Lichtstroms durch ein Verlagern der Optik gegenüber der Lichtquelle erfolgt.

6. Leuchte nach Anspruch 1, wobei die Steuerung eingerichtet ist, um den Lichtstrom in mehreren Raumwinkeln (20b, 20d) der Leuchte, in welchen sich jeweils eine Person oder ein Fahrzeug von der Leuchte entfernt, zu erhöhen.

7. Leuchte nach einem der vorherigen Ansprüche, wobei die Sensorinformation durch wenigstens einen Sensor (8, 24) bereitgestellt wird, und der Sensor (8, 24) in der Leuchte verbaut ist.

8. Leuchte nach einem der Ansprüche 1 bis 6, wobei die Leuchte eine Schnittstelle aufweist, die einrichtet ist, um ein Sensorinformation, die durch einen extern von der Leuchte verbauten Sensor bereitgestellt wird, zu empfangen.

9. Leuchte nach einem der Ansprüche 1 bis 6, wobei die Sensorinformation durch mehrere Sensoren bereitgestellt wird, wobei wenigstens ein Sensor (8, 24) in der Leuchte verbaut ist, und wenigstens eine weitere Sensorinformationen durch einen extern von der Leuchte verbauten Sensor bereitgestellt wird, und die Leuchte eine Schnittstelle aufweist, die einrichtet ist, um die Sensorinformation, die durch den extern von der Leuchte verbauten Sensor bereitgestellt wird, zu empfangen.

10. Leuchte nach Anspruche 7 bis 9, wobei die Sensoreinrichtung ein Radarsensor, einen Ultraschallsensor, ein Hochfrequenz-Sensor, ein Mikrowellensensor, ein Kamerasensor, ein LIDAR-Sensor, ein Helligkeitssensor, ein Leuchtdichtesensor und/oder ein Infrarot-Sensor ist.

## Claims

1. A luminaire (2) for stationary mounting in an interior or exterior with a variable light distribution,
wherein the luminaire has a control device (8, 24) which is configured to receive sensor information to determine a solid angle of the luminaire (2) in which a person or a vehicle (6) approaches the luminaire by means of the sensor information,
and to control the light distribution of the luminaire (2) in order to reduce a luminous flux of the luminaire which is emitted in said solid angle (4a),
wherein the control is further configured to increase the luminous flux in a solid angle of the luminaire (4c) in which the person or vehicle is located and moves away from the luminaire,
wherein the luminaire (2) is configured for illuminating several roads (28a, 28b), in particular parallel to each other, and
the control is configured to determine solid angles (20a, 20c) of the luminaire in which a person or a vehicle (22a, 22b) approaches from the sensor information for several persons and/or vehicles (22a, 22b),
and to control the luminaire in order to reduce luminous fluxes of the luminaire which are emitted in said solid angles (20a, 20c).

2. The luminaire according to claim 1, wherein the luminaire (2) has a wide-beam light intensity distribution curve in the C(0-180) plane.

3. The luminaire according to any one of the preceding claims, wherein the luminaire (2) is configured for attachment to a building structure, in particular wall or ceiling, or to a pole.

4. The luminaire according to any one of the preceding claims, wherein the luminaire (2) has several light sources, and the adaptation of the luminous flux is done by dimming at least one of the several light sources.

5. The luminaire according to any one of the preceding claims, wherein the luminaire (2) has at least one movable optic, and the adaptation of the luminous flux is done by displacing the optic with respect to the light source. 6.

6. The luminaire according to claim 1, wherein the control is configured to increase the luminous flux in several solid angles (20b, 20d) of the luminaire in which a person or a vehicle moves away from the luminaire.

7. The luminaire according to any one of the preceding claims, wherein the sensor information is provided by at least one sensor (8, 24), and the sensor (8, 24) is installed in the luminaire.

8. The luminaire according to any one of claims 1 to 6, wherein the luminaire has an interface which is configured to receive sensor information which is provided by a sensor installed externally of the luminaire.

9. The luminaire according to any one of claims 1 to 6, wherein the sensor information is provided by several sensors, wherein at least one sensor (8, 24) is installed in the luminaire, and at least one further sensor information is provided by a sensor installed externally of the luminaire, and the luminaire has an interface which is configured to receive the sensor information which is provided by the sensor installed externally of the luminaire.

10. The luminaire according to claims 7 to 9, wherein the sensor device is a radar sensor, an ultrasonic sensor, a high frequency sensor, a microwave sensor, a camera sensor, a LIDAR sensor, a brightness sensor, a luminance sensor and/or an infrared sensor.

## Revendications

1. Luminaire (2) destiné à être monté de manière stationnaire à l'intérieur ou à l'extérieur avec une distribution de lumière variable,
dans lequel le luminaire comprend un dispositif de commande (8, 24), qui est conçu pour recevoir une information de capteur, pour déterminer, grâce à l'information de capteur, un angle spatial du luminaire (2) dans lequel une personne ou un véhicule (6) s'approche du luminaire et pour contrôler la distribution de lumière du luminaire (2) afin de réduire un flux lumineux du luminaire qui est émis dans l'angle spatial (4a) mentionné,
dans lequel la commande est en outre conçue pour augmenter le flux lumineux dans un angle spatial du luminaire (4c) dans lequel la personne ou le véhicule se trouve et s'éloigne du luminaire,
dans lequel le luminaire (2) est conçu pour l'éclairage de plusieurs rues (28a, 28b), plus particulièrement parallèles entre elles et
la commande est conçue pour déterminer, à partir de l'information de capteur, pour plusieurs personnes et/ou véhicules (22a, 22b), l'angle spatial (20a, 20c) du luminaire dans lequel une personne ou un véhicule (22a, 22b) s'approche,
et pour contrôler le luminaire afin de réduire les flux lumineux du luminaire qui sont émis dans l'angle spatial (20a, 20c) mentionné.

2. Luminaire selon la revendication 1, dans lequel le luminaire (2) comprend, dans le plan C(0-180), une courbe de distribution d'intensité lumineuse à faisceau large.

3. Luminaire selon l'une des revendications précédentes, dans lequel le luminaire (2) est conçu pour être fixé à une structure de bâtiment, plus particulièrement un mur ou un plafond, ou à un mât.

4. Luminaire selon l'une des revendications précédentes, dans lequel le luminaire (2) comprend plusieurs sources de lumière et l'adaptation du flux lumineux a lieu grâce à une variation d'au moins une des plusieurs sources de lumière.

5. Luminaire selon l'une des revendications précédentes, dans lequel le luminaire (2) comprend au moins une optique mobile et l'adaptation du flux lumineux a lieu grâce à un déplacement de l'optique par rapport à la source de lumière.

6. Luminaire selon la revendication 1, dans lequel la commande est conçue pour augmenter le flux lumineux dans plusieurs angles spatiaux (20b, 20d) du luminaire, dans lesquels une personne ou un véhicule s'éloigne du luminaire.

7. Luminaire selon l'une des revendications précédentes, dans lequel l'information de capteur est mise à disposition par au moins un capteur (8, 24) et le capteur (8, 24) est intégré dans le luminaire.

8. Luminaire selon l'une des revendications 1 à 6, dans lequel le luminaire comprend une interface qui est conçue pour recevoir une information de capteur qui est mise à disposition par un capteur monté à l'extérieur du luminaire.

9. Luminaire selon l'une des revendications 1 à 6, dans lequel l'information de capteur est mise à disposition par plusieurs capteurs, dans lequel au moins un capteur (8, 24) est intégré dans le luminaire, et au moins une autre information de capteur est mise à disposition par un capteur monté à l'extérieur du luminaire, et le luminaire comprend une interface qui est conçue pour recevoir l'information de capteur qui est mise à disposition par le capteur monté à l'extérieur du luminaire.

10. Luminaire selon l'une des revendications 7 à 9, dans lequel le dispositif de capteur est un capteur radar, un capteur à ultrasons, un capteur à haute fréquence, un capteur à micro-ondes, un capteur de type caméra, un capteur LIDAR, un capteur de luminosité, un capteur de densité lumineuse et/ou un capteur infrarouge.
